# EUROPEAN PATENT SPECIFICATION

(11) **EP 3 684 845 B1**
(45) Date of publication and mention of the grant of the patent: **21.12.2022**
(21) Application number: 18783251.4
(22) Date of filing: 19.09.2018
(51) Int. Cl.: C08G 73/10

(54) **METHOD OF MODIFYING A POLYIMIDE AND THE POLYIMIDE RESULTING THEREFROM**
METHODE ZUR MODIFIZIERUNG VON POLYIMIDEN UND DIE DARAUS RESULTIERENDEN POLYIMIDE
PROCEDE DE MODIFICATION D'UN POLYIMIDE ET POLYIMIDE OBTENU

(30) Priority: 20.09.2017 US 201762560785 P
(43) Date of publication of application: 29.07.2020
(73) Proprietor: SHPP Global Technologies B.V., 4612 PX Bergen op Zoom (NL)
(72) Inventor: TOPLE, Nitin Vilas, Mt. Vernon, Indiana 47620-9367 (US); KALYANARAMAN, Viswanathan, Mt. Vernon, Indiana 47620-9367 (US); LEUNG, Kelly, Mt. Vernon, Indiana 47620-9367 (US); GUGGENHEIM, Thomas Link, Mt. Vernon, Indiana 47620-9367 (US)
(74) Representative: Balder IP Law, S.L.
(86) International application number: PCT/US2018/051692
(87) International publication number: WO 2019/060380

(56) References cited:
- US-A1- 2003 181 626
- US-A1- 2017 137 593
- GRADE M M ET AL: "POLYMIDE-POLYFORMAL BLOCK COPOLYMERS", JOURNAL OF POLYMER SCIENCE, POLYMER CHEMISTRY EDITION, INTERSCIENCE PUBLISHERS, NEW YORK, NY, US, vol. 27, no. 5, 1 April 1989 (1989-04-01), pages 1467-1480, XP000083973, ISSN: 0360-6376
- FANG J ET AL: "Gas permeation properties of hyperbranched polyimide membranes", JOURNAL OF MEMBRANE SCI, ELSEVIER BV, NL, vol. 182, no. 1-2, 15 February 2001 (2001-02-15), pages 245-256, XP004314975, ISSN: 0376-7388, DOI: 10.1016/S0376-7388(00)00571-8
- DER-JANG LIAW ET AL: "Advanced polyimide materials: Syntheses, physical properties and applications", PROGRESS IN POLYMER SCIENCE, PERGAMON PRESS, OXFORD, GB, vol. 37, no. 7, 24 February 2012 (2012-02-24), pages 907-974, XP028518959, ISSN: 0079-6700, DOI: 10.1016/J.PROGPOLYMSCI.2012.02.005 [retrieved on 2012-03-01]

## Description

### BACKGROUND

Polyimides are highly useful engineering thermoplastics. While a number of polyimides are commercially available it would be desirable to be able to structurally modify an available polyimide to modify one or more physical properties. Additionally it's desirable to be able recycle existing polyimides and modify their properties as needed.

### SUMMARY

The aforementioned need is met by a method for modifying a polyimide comprising reacting a first polyimide with an amine to produce a second polyimide having an anhydride-amine stoichiometry of -2 to -40 mol% and reacting the second polyimide with a bis(ether anhydride), bisanhydride, or tetracarboxylic acid to produce a final polyimide having an anhydride-amine stoichiometry of -1 to 2 mol%.

Also disclosed herein is a method for modifying a polyimide comprising reacting a first polyimide with an amine to produce a second polyimide having an anhydride-amine stoichiometry of -2 to -40 mol% and reacting the second polyimide with a monoanhydride to produce a final polyimide having an anhydride-amine stoichiometry of -1 to 2 mol%.

Also disclosed is a method for modifying a polyimide comprising reacting a first polyimide with diamine and a bis(anhydride), bis(ether anhydride) or tetracarboxylic acid to produce a final polyimide having an anhydride-amine stoichiometry of -1 to 2 mol%.

Also disclosed herein is a polyimide comprising 20 to 300 structural units derived from a first bis(anhydride) and a diamine, a linking unit derived from a second bis(anhydride)), a bis(ether anhydride), or a tetra carboxylic acid, wherein the polyimide has a weight average molecular weight of 10,000 to 150,000 Daltons as determined by gel permeation chromatography using polystyrene standards and an anhydride-amine stoichiometry of -1 to 2 mol%.

The above described and other features are exemplified by the following detailed description.

### DETAILED DESCRIPTION

Existing polyimides may be modified to produce a modified polyimide having properties tailored to a desired application by modifying physical properties such as glass transition temperature, melt viscosity, chemical resistance, molecular weight, or a combination thereof. The existing polyimide (i.e., the first polyimide) is reacted with a diamine which produces a second polyimide having a weight average molecular weight which is less than the weight average molecular weight of the existing polyimide. The second polyimide has a -2 to -40 mol% excess of amine end groups relative to anhydride end groups

In some embodiments the second polyimide is further reacted with a mono anhydride to form a final polyimide having a weight average molecular weight less than the weight average molecular weight of the first polyimide and an anhydride-amine stoichiometry of -1 to 2 mol%.

In some embodiments the second polyimide is further reacted with a bis(ether anhydride), a bis(anhydride) or tetracarboxylic acid to form a final polyimide. The bis(ether anhydride), bis(anhydride) or tetracarboxylic acid may be chosen to result in a final polyimide with different physical properties than the existing polyimide.

It is also contemplated that the first polyimide can be combined with a diamine and a bis(anhydride), bis(ether anhydride) or tetracarboxylic acid at the same time and reacted to produce a final polyimide having an anhydride-amine stoichiometry of -1 to 2 mol%.

Anhydride-amine stoichiometry is defined as the mol% of anhydride - the mol% of amine groups. An anhydride-amine stoichiometry with a negative value indicates an excess of amine groups. Anhydride content and amine content can be determined by Fourier transformed infrared spectroscopy or near infrared spectroscopy.

The existing polyimides comprise more than 1, for example 5 to 1000, or 5 to 500, or 10 to 100, structural units of formula (1) 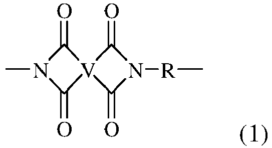
wherein each V is the same or different, and is a substituted or unsubstituted tetravalent C₄₋₄₀ hydrocarbon group, for example a substituted or unsubstituted C₆₋₂₀ aromatic hydrocarbon group, a substituted or unsubstituted, straight or branched chain, saturated or unsaturated C2-₂₀ aliphatic group, or a substituted or unsubstituted C₄₋₈ cycloaliphatic group, in particular a substituted or unsubstituted C₆₋₂₀ aromatic hydrocarbon group. Exemplary aromatic hydrocarbon groups include any of those of the formulas 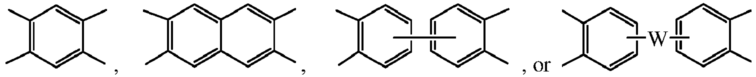
wherein W is -O-, -S-, -C(O)-, -SO₂-, -SO-, a C₁₋₁₈ hydrocarbon moiety that can be cyclic, acyclic, aromatic, or non-aromatic, -P(R^{a})(=O)- wherein R^{a} is a C₁₋₈ alkyl or C₆₋₁₂ aryl, - C_{y}H_{2y}- wherein y is an integer from 1 to 5 or a halogenated derivative thereof (which includes perfluoroalkylene groups), or a group of the formula -O-Z-O- as described in formula (3) below.

Each R in formula (1) is the same or different, and is a substituted or unsubstituted divalent organic group, such as a C₆₋₂₀ aromatic hydrocarbon group or a halogenated derivative thereof, a straight or branched chain C₂₋₂₀ alkylene group or a halogenated derivative thereof, a C₃₋₈ cycloalkylene group or halogenated derivative thereof, in particular a divalent group of formulas (2) 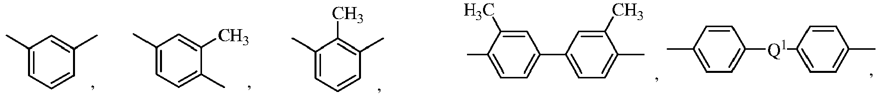 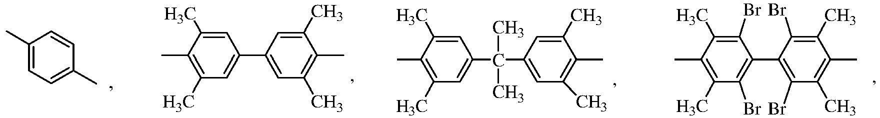 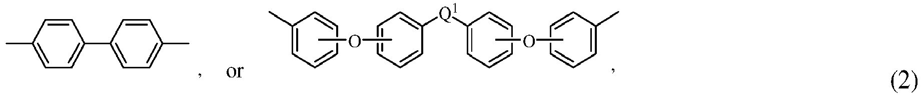 wherein Q¹ is -O-, -S-, -C(O)-, -SO₂-, -SO-, -P(R^{a})(=O)- wherein R^{a} is a C₁₋₈ alkyl or C₆₋₁₂ aryl, -C_{y}H_{2y}- wherein y is an integer from 1 to 5 or a halogenated derivative thereof (which includes perfluoroalkylene groups), or -(C₆H₁₀)_{z}- wherein z is an integer from 1 to 4. In an embodiment R is m-phenylene, p-phenylene, or a diaryl sulfone.

Polyetherimides are a class of polyimides that comprise more than 1, for example 10 to 1000, or 10 to 500, structural units of formula (3) 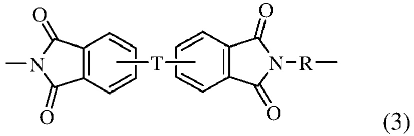 wherein each R is the same or different, and is as described in formula (1).

Further in formula (3), T is -O- or a group of the formula -O-Z-O- wherein the divalent bonds of the -O- or the -O-Z-O- group are in the 3,3', 3,4', 4,3', or the 4,4' positions. The group Z in -O-Z-O- of formula (3) is a substituted or unsubstituted divalent organic group, and can be an aromatic C₆₋₂₄ monocyclic or polycyclic moiety optionally substituted with 1 to 6 C₁₋₈ alkyl groups, 1 to 8 halogen atoms, or a combination comprising at least one of the foregoing, provided that the valence of Z is not exceeded. Exemplary groups Z include groups derived from a dihydroxy compound of formula (4) 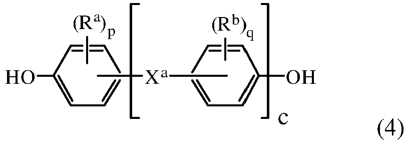
wherein R^{a} and R^{b} can be the same or different and are a halogen atom or a monovalent C₁₋₆ alkyl group, for example; p and q are each independently integers of 0 to 4; c is 0 to 4; and X^{a} is a bridging group connecting the hydroxy-substituted aromatic groups, where the bridging group and the hydroxy substituent of each C6 arylene group are disposed ortho, meta, or para (specifically para) to each other on the C₆ arylene group. The bridging group X^{a} can be a single bond, -O-, -S-, -S(O)-, -S(O)₂-, -C(O)-, or a C₁₋₁₈ organic bridging group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C6 arylene groups connected thereto are each connected to a common alkylidene carbon or to different carbons of the C₁₋₁₈ organic bridging group. A specific example of a group Z is a divalent group of formula (4a) 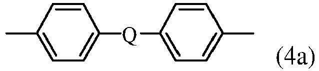
wherein Q is -O-, -S-, -C(O)-, -SO₂-, -SO-, or -C_{y}H_{2y}- wherein y is an integer from 1 to 5 or a halogenated derivative thereof (including a perfluoroalkylene group). In a specific embodiment Z is a derived from bisphenol A, such that Q in formula (3a) is 2,2-isopropylidene.

In an embodiment in formula (3), R is m-phenylene or p-phenylene and T is - O-Z-O- wherein Z is a divalent group of formula (4a). Alternatively, R is m-phenylene or p-phenylene and T is -O-Z-O wherein Z is a divalent group of formula (4a) and Q is 2,2-isopropylidene.

In some embodiments, the polyetherimide can be a copolymer, for example, a polyetherimide sulfone copolymer comprising structural units of formula (1) wherein at least 50 mole% of the R groups are of formula (2) wherein Q¹ is -SO₂- and the remaining R groups are independently p-phenylene or m-phenylene or a combination comprising at least one of the foregoing; and Z is 2,2'-(4-phenylene)isopropylidene.

Alternatively, the polyetherimide copolymer optionally comprises additional structural imide units, for example imide units of formula (1) wherein R and V are as described in formula (1), for example V is 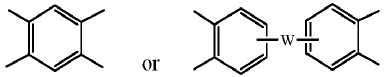
wherein W is a single bond, -O-, -S-, -C(O)-, -SO₂-, -SO-, a C₁₋₁₈ hydrocarbon moiety that can be cyclic, acyclic, aromatic, or non-aromatic, -P(R^{a})(=O)- wherein R^{a} is a C₁₋₈ alkyl or C₆₋₁₂ aryl, or -C_{y}H_{2y}- wherein y is an integer from 1 to 5 or a halogenated derivative thereof (which includes perfluoroalkylene groups). These additional structural imide units preferably comprise less than 20 mol% of the total number of units, and more preferably can be present in amounts of 0 to 10 mol% of the total number of units, or 0 to 5 mol% of the total number of units, or 0 to 2 mole % of the total number of units. In some embodiments, no additional imide units are present in the polyetherimide. The polyimide and polyetherimide can be prepared by any of the methods well known to those skilled in the art, including the reaction of an aromatic bis(ether anhydride) of formula (5a) or formula (5b) 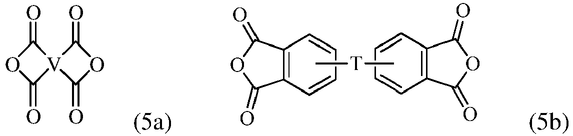
or a chemical equivalent thereof, with an organic diamine of formula (6)

   H₂N-R-NH₂ (6)
wherein V, T, and R are defined as described above. Copolymers of the polyetherimides can be manufactured using a combination of an aromatic bis(ether anhydride) of formula (5) and a different bis(anhydride), for example a bis(anhydride) wherein T does not contain an ether functionality, for example T is a sulfone.

Illustrative examples of bis(anhydride)s include 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis[4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; and, 4-(2,3-dicarboxyphenoxy)-4'-(3,4-dicarboxyphenoxy)diphenyl sulfone dianhydride, as well as various combinations thereof.

Examples of organic diamines include hexamethylenediamine, polymethylated 1,6-n-hexanediamine, heptamethylenediamine, octamethylenediamine, nonamethylenediamine, decamethylenediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3,5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis-(4-aminophenyl) sulfone (also known as 4,4'-diaminodiphenyl sulfone (DDS)), and bis(4-aminophenyl) ether. Any regioisomer of the foregoing compounds can be used. Combinations of these compounds can also be used. In some embodiments the organic diamine is m-phenylenediamine, p-phenylenediamine, 4,4'-diaminodiphenyl sulfone, or a combination comprising at least one of the foregoing.

The polyimides and polyetherimides can have a melt index of 0.1 to 10 grams per minute (g/min), as measured by American Society for Testing Materials (ASTM) D1238 at 340 to 370 °C, using a 6.7 kilogram (kg) weight. In some embodiments, the polyetherimide polymer has a weight average molecular weight (Mw) of 10,000 to 150,000 grams/mole (Dalton), as measured by gel permeation chromatography, using polystyrene standards. In some embodiments the polyetherimide has an Mw of 10,000 to 80,000 Daltons. Such polyetherimide polymers typically have an intrinsic viscosity greater than 0.2 deciliters per gram (dl/g), or, more specifically, 0.35 to 0.7 dl/g as measured in m-cresol at 25 °C.

The polyimide may have a glass transition temperature of 180 to 310 °C as determined by differential scanning calorimetry (ASTM D3418).

The existing polyimide (i.e., the first polyimide) is reacted with a diamine which produces a second polyimide having a weight average molecular weight which is less than the weight average molecular weight of the existing polyimide. In some embodiments the second polyimide has a weight average molecular weight which is 10 to 60 %, or 20 to 60 %, or 30 to 60 % of the weight average molecular weight of the first polyimide. The second polyimide also has an anhydride-amine stoichiometry of -2 to -40 mol%.

The reaction may be carried out in melt or in solution. When the reaction between the existing polyimide and the diamine is performed in melt the reaction occurs in a melt mixing apparatus such as an extruder or helicone. The reaction temperature may be 50 to 250°C, or 50 to 200 °C, or 100 to 150 °C above the glass transition temperature of the existing polyimide. In some embodiments at least a portion of the reaction is run at a pressure which is less than atmospheric pressure.

When the reaction is run using a solvent the solvent may be an aprotic solvent. Exemplary solvents include ortho dichlorobenzene, veratrole, anisole, sulfolane, dimethyl sulfoxide, dimethyl acetamide, dimethyl formamide, cylcopentanone, cyclohexanone, tetrahydrofuran, N-methyl pyrrolidone, and combinations thereof. The reaction temperature may be -10 to 10 °C, or -25 to 25 °C, or -50 to 50 °C, -50 to 100 °C in relation to the boiling point of the solvent. When the reaction using a solvent is run at a temperature above the boiling point of the solvent the reaction pressure is maintained according to the vapor pressure of the solvent.

The diamine used in the method may be any diamine stable at the reaction temperatures described herein. The diamine may be an aromatic diamine of formula (10)

H₂N-R¹-NH₂ (10)

wherein R¹ is a substituted or unsubstituted divalent aromatic group, such as a C₆₋₂₀ aromatic hydrocarbon group or a halogenated derivative thereof, in particular a divalent group of formulae (2) as described above, wherein Q¹ is -O-, -S-, -C(O)-, -SO₂-, -SO-, -C_{y}H_{2y}- wherein y is an integer from 1 to 5 or a halogenated derivative thereof (which includes perfluoroalkylene groups), or -(C₆H₁₀)_{z}- wherein z is an integer from 1 to 4. In an embodiment R¹ is m-phenylene, p-phenylene, or a diaryl sulfone.

R¹ may be the same as or different from R. In some embodiments R and R¹ are different C₆₋₂₀ aromatic hydrocarbon groups. In some embodiments R and R¹ are the same C₆₋₂₀ aromatic hydrocarbon group. In a particular embodiment R and R¹ are both derived from m-phenylenediamine.

Examples of organic diamines include 1,4-butane diamine, 1,5-pentanediamine, 1,6-hexanediamine, 1,7-heptanediamine, 1,8-octanediamine, 1,9-nonanediamine, 1,10-decanediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3,5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis-(4-aminophenyl) sulfone (also known as 4,4'-diaminodiphenyl sulfone (DDS)), and bis(4-aminophenyl) ether. Any regioisomer of the foregoing compounds may be used. C₁₋₄ alkylated or poly(C₁₋₄)alkylated derivatives of any of the foregoing may be used, for example a polymethylated 1,6-hexanediamine. Combinations of these compounds may also be used. In some embodiments the organic diamine is m-phenylenediamine, p-phenylenediamine, 4,4'-diaminodiphenyl sulfone, 3,4'-diaminodiphenyl sulfone, 3,3'-diaminodiphenyl sulfone, or a combination comprising at least one of the foregoing.

The diamine is combined with the existing polyimide in an amount of 2 to 40 mole percent based on the moles of dianhydride in the existing polyimide to form the second polyimide. Within this range the amount of diamine may be 2 to 30, or, 2 to 20 mole percent, based on the moles of dianhydride in the existing polyimide. As shown in the Examples below, higher amounts of the aromatic diamine generally result in lower molecular weights.

The second polyimide is reacted with a monoanhydride, a bis(anhydride), a bis(ether anhydride), or tetracarboxylic acid to form the final polyimide. The amount of monoanhydride, bis(anhydride), bis(ether anhydride), or tetracarboxylic acid is based on the amount of amine end groups in the second polyimide and is chosen to result in a polyimide having an anhydride-amine stoichiometry of -1 to 2 mol%. The reaction to produce the final polyimide may proceed in melt or in a solvent. In some embodiments the method (melt or in solvent) used to form the second polyimide is also used to form the final polyimide and thus the final polyimide may be formed without requiring isolation of the second polyimide. It is also contemplated that the reaction to form the second polyimide may proceed in melt while the reaction to form the final polyimide may proceed in solvent or vice versa. Exemplary solvents to form the final polyimide may be the same as the solvents used to form the second polyimide. It is also contemplated that when both the second polyimide and the final polyimide are formed in solvent the solvent used in the two reactions may be the same or different. When both reactions proceed in melt the final polyimide may have a solvent content less than 50 ppm.

The temperature for forming the final polyimide depends upon whether the reaction proceeds in melt or in solvent. For reactions in melt the reaction temperature may be 50 to 250°C, or 50 to 200 °C, or 100 to 150 °C above the glass transition temperature of the final polyimide. For reactions in solvent the reaction temperature may be -10 to 10 °C, or -25 to 25 °C, or -50 to 50 °C, -50 to 100 °C in relation to the boiling point of the solvent. When the reaction using a solvent is run at a temperature above the boiling point of the solvent the reaction pressure is maintained according to the vapor pressure of the solvent.

When the reaction is performed in melt, the pressure may be less than or equal to 50,000 Pa, less than or equal to 25,000 Pa, less than or equal to 10,000 Pa, less than 5,000 Pa, or less than or equal to 1,000 Pa. In some embodiments the pressure is reduced for the final 50%, 35% or 25% of the polymerization time. In some embodiments the pressure is reduced once the reaction mixture has a weight average molecular weight that is greater than or equal to 20%, or greater than or equal to 60%, or greater than or equal to 90% of the weight average molecular weight of the final polyetherimide.

Illustrative examples of bis(anhydride)s and bis(ether anhydride)s include 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride (BPADA); 4,4'-bis(3,4-dicarboxyphenoxy)diphenyl sulfone dianhydride; 2,2-bis[4-(3,4-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; and, 4-(2,3-dicarboxyphenoxy)-4'-(3,4-dicarboxyphenoxy)diphenyl sulfone dianhydride, as well as various combinations thereof.

Illustrative tetracarboxylic acids are the tetracarboxylic acid equivalents of the illustrative bis(anhydrides) and bis(ether anhydride)s listed in the previous paragraph.

Illustrative monoanhydrides include phthalic anhydride, nadic anhydride, maleic anhydride, 1,8-naphthalic anhydride, succinic anhydride, and combinations thereof.

The polyetherimide may have a chlorine content less than or equal to 100 ppm, or less than or equal to 50 ppm, or, less than or equal to 25 ppm. Chlorine content can be determined using x-ray fluorescence spectrometry on a solid polyetherimide sample.

The polyetherimide may have a solvent content less than 50 ppm, or less than 30 ppm, or less than 10 ppm. Solvent content may be determined by gas chromatography or liquid chromatography.

In some embodiments the polyetherimide has a change in melt viscosity of less than or equal to 50%, less than or equal to 40%, less than or equal to 30%, or less than or equal to 20% after being maintained for 30 minutes at 390 °C wherein melt viscosity is determined by ASTM D4440. In some embodiments, the polyetherimide has a change in melt viscosity of -30% to 50% after being maintained for 30 minutes at 390 °C wherein melt viscosity is determined by ASTM D4440.

The invention is further demonstrated by the following non-limiting examples.

### EXAMPLES

An existing polyetherimide (PEI) was used as a starting material. The existing polyetherimide was ground to a powder with 350 micrometer mean particle size. The diamine was ground into fine powder using mechanical grinder.

The existing polyetherimide powder and diamine powder were dry mixed. The powder mixes were fed to an 18 millimeter (mm), 12 barrel twin screw extruder. The temperature profile of the extruder was as follows:

| Barrel 1 | Feed | 50 °C |
|---|---|---|
| Barrel 2 | Conveying | 200 °C |
| Barrel 3-4 | Conveying | 300 °C |
| Barrel 5-6 | Mixing | 350 °C |
| Barrel 6-12 | Mixing + Conveying | 350 °C |

Barrels 8 and 11 had a vent that had a vacuum of 10 to 12 mm Hg. The feed rate was 2 kilograms per hour (kg/hr) and extruder screws rotated at 250 RPM.

Molecular weight of the polymers was determined using GPC with polystyrene standards.

The stoichiometric analysis of excess amine or excess anhydride was determined via FT-IR. This is reported in mol% and includes both mono-functional monomer (where the other end is part of the polymer film) as well as di-functional monomer.

The diamines, bis(ether anhydrides) and tetracarboxylic acids used in the following examples are:
m-phenylene diamine (mPD)
p-phenylene diamine (pPD)
diamino diphenyl sulfone (DDS)
phthalic anhydride (PA)
2,2-bis[4-(3,4-dicarboxyphenoxy)phenyl]propane dianhydride (BPADA)
4,4'-oxydiphthalic anhydride (ODPA)
4,4'-oxydiphthalic tetraacid (ODTA).

### Example 1.

This experiment was performed to show that a low molecular weight PEI may be made by addition of a diamine followed by a mono-anhydride.

Step 1: 3.6428 grams (g) mPD was melt mixed with 1000 g of existing PEI in an extruder to form the second polyetherimide. The existing PEI comprised structural units derived from BPADA and mPD.

Step 2: 4.3005 g PA was melt mixed with 500 g of second polyetherimide in an extruder. Results are shown in Table 1.

**Table 1.**

| Sample | Mw (Da) | PDI | Amine end group(mol%) | Anhydride end group (mol%) |
|---|---|---|---|---|
| Existing PEI | 44438 | 2.1 | 0.00% | 0.15% |
| New PEI after mPD & PA addition | 36367 | 2.08 | 0.97% | 1.11% |
| New PEI after additional 15 minutes @ 380°C | 37759 | 2.09 | 0.29% | 0.21% |

### Example 2.

This experiment shows the effect of adding a diamine to an existing PEI to make a second PEI followed by reacting the second PEI with a bis(ether anhydride) different from the one used in the existing PEI to make a final PEI with higher Tg. The existing PEI comprised structural units derived from BPADA and mPD. Results are shown in Table 2.

Step 1: 38g mPD was melt mixed with 1000 g of the existing PEI in an extruder as described above to form a second PEI in an extruder using the temperature profile shown above.

Step 2: Step 2: 60g of the second PEI from Step 1 with 5.3 g of PMDA was melt mixed in a batch reactor at 325°C and 100 rpm for 30 minutes to form the final PEI.

**Table 2.**

| Sample | Mw (Da) | PDI | Amine end group (mol%) | Anhydride end group (mol%) | Tg (deg C) |
|---|---|---|---|---|---|
| Existing PEI | 54326 | 2.11 | - | - | 218 |
| Second PEI | 10090 | 2.15 | 19.53 | - | 180 |
| Final PEI | 38618 | 2.3 | 0.5639 | 0.1615 | 223.4 |

### Example 3.

This experiment shows the effect of adding a diamine and a new dianhydride to an existing PEI to make a final PEI. The existing PEI comprised structural units derived from BPADA and mPD. 322.62g mPD, and 45.63 g of PMDA were melt mixed with 500 g of the existing PEI in an extruder as described above to form a final PEI using the temperature profile shown above. Results are shown in Table 3.

**Table 3.**

| Sample | Mw (Da) | PDI | Amine end group (mol%) | Anhydride end group (mol%) | Tg (deg C) |
|---|---|---|---|---|---|
| Existing PEI | 44468 | 2.11 | 0 | 0.1516 | 218 |
| Final PEI | 42891 | 2.08 | 0.92 | 0.94 | 218 |

### Example 4.

This experiment shows the effect of adding a diamine to an existing PEI to make a second PEI followed by reacting the second PEI with a tetraacid to make a final PEI. The existing PEI comprised structural units derived from BPADA and DDS.

Step 1: 37g pPD was melt mixed with 1000 g of the existing PEI in an extruder as described above to form a second PEI.

Step 2: 2g of the second PEI from Step 1 was mixed with 0.2875 g of ODTA in 20 milliliters (ml) ortho dichlorobenzene (oDCB) and reacted in a test tube for 1 hour at 180°C.

The solution was then heated at 385°C for 15 minutes to remove the solvent and isolate the final PEI. Results are shown in Table 4.

**Table 4.**

| Sample | Mw (Da) | PDI | Tg (°C) |
|---|---|---|---|
| Starting material | 44526 | 2.3 | 245 |
| Final PEI | 36577 | 2.37 | 243.9 |

### Example 5.

The procedure from Example 4 was used but with a different diamine.

Step 1: 76.05g DDS was added to 895 g of existing PEI.

Step 2: 2.547g of the second PEI from Step 1 was mixed with 0.2857 g of ODTA in 20ml oDCB and reacted in a test tube for 1 hour at 180°C.

The solution was then heated at 385°C for 15 minutes to remove the solvent and isolate the polymer. Results are shown in Table 5.

**Table 5.**

| Sample | Mw (Da) | PDI | Tg (° C) |
|---|---|---|---|
| Starting material | 44526 | 2.3 | 245 |
| Final PEI | 37547 | 2.35 | 233 |

### Example 6.

In this example the dianhydride (ODPA) of the tetraacid (ODTA) used in Examples 4 and 5 was used.

Step 1: 109.21g pPD was added to 2000 g of existing PEI. The existing PEI comprised structural units derived from BPADA and mPD.

6A Step 2: 48.56g of the second PEI from Step 1 was melt mixed with 10.678 g of BPADA and 1.566g of ODPA in a batch reactor for 15 minutes at 325°C and 100 rpm.

6B Step 2: 58.27g of the second polymer from Step 1 was melt mixed with 8.89 g of ODPA in a batch reactor for 15 minutes at 325°C and 100 rpm.

6C Step 2: 58.27g of the second PEI from Step 1 was melt mixed with 9.8 g of ODPA in a batch reactor for 3 minutes at 350°C.

Results are shown in Table 6.

**Table 6.**

| Sample | Mw (Da) | PDI | Amine end group (mol%) | Anhydride end grou0 (mol%) | Tg (deg C) |
|---|---|---|---|---|---|
| Existing PEI | 54310 | 2.156 | | | 218 |
| 6A Final PEI | 79408 | 2.683 | 0.3998 | 0.3119 | 225.1 |
| 6B Final PEI | 54243 | 3.759 | 3.007 | 0 | 227.0 |
| 6C Final PEI | 94368 | 3.068 | 0.3579 | 0.228 | 233.0 |

All ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combination" is inclusive of blends, mixtures, alloys, reaction products, and the like. Furthermore, the terms "first," "second," and the like, herein do not denote any order, quantity, or importance, but rather are used to denote one element from another. The terms "a" and "an" and "the" herein do not denote a limitation of quantity, and are to be construed to cover both the singular and the plural, unless otherwise indicated herein or clearly contradicted by context. Reference throughout the specification to "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl" includes groups containing carbon, hydrogen, and optionally one or more heteroatoms (e.g., 1, 2, 3, or 4 atoms such as halogen, O, N, S, P, or Si). "Alkyl" means a branched or straight chain, saturated, monovalent hydrocarbon group, e.g., methyl, ethyl, i-propyl, and n-butyl. "Alkylene" means a straight or branched chain, saturated, divalent hydrocarbon group (e.g., methylene (-CH2-) or propylene (-(CH₂)₃-)). "Alkenyl" and "alkenylene" mean a monovalent or divalent, respectively, straight or branched chain hydrocarbon group having at least one carbon-carbon double bond (e.g., ethenyl (-HC=CH₂) or propenylene (-HC(CH₃)=CH₂-). "Alkynyl" means a straight or branched chain, monovalent hydrocarbon group having at least one carbon-carbon triple bond (e.g., ethynyl). "Alkoxy" means an alkyl group linked via an oxygen (i.e., alkyl-O-), for example methoxy, ethoxy, and sec-butyloxy. "Cycloalkyl" and "cycloalkylene" mean a monovalent and divalent cyclic hydrocarbon group, respectively, of the formula -CₙH₂ₙ₋ₓ and -CₙH₂ₙ₋₂ₓ- wherein x is the number of cyclization(s). "Aryl" means a monovalent, monocyclic or polycyclic aromatic group (e.g., phenyl or naphthyl). "Arylene" means a divalent, monocyclic or polycyclic aromatic group (e.g., phenylene or naphthylene). "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more halogen (F, Cl, Br, or I) substituents, which may be the same or different. The prefix "hetero" means a group or compound that includes at least one ring member that is a heteroatom (e.g., 1, 2, or 3 heteroatoms, wherein each heteroatom is independently N, O, S, or P.

"Substituted" means that the compound or group is substituted with at least one (e.g., 1, 2, 3, or 4) substituents instead of hydrogen, where each substituent is independently nitro (-NO₂), cyano (-CN), hydroxy (-OH), halogen, thiol (-SH), thiocyano (-SCN), C₁₋₆ alkyl, C₂₋₆ alkenyl, C₂₋₆ alkynyl, C₁₋₆ haloalkyl, C₁₋₉ alkoxy, C₁₋₆ haloalkoxy, C₃₋₁₂ cycloalkyl, C₅₋₁₈ cycloalkenyl, C₆₋₁₂ aryl, C₇₋₁₃ arylalkylene (e.g, benzyl), C₇₋₁₂ alkylarylene (e.g, toluyl), C₄₋₁₂ heterocycloalkyl, C₃₋₁₂ heteroaryl, C₁₋₆ alkyl sulfonyl (-S(=O)₂-alkyl), C₆₋₁₂ arylsulfonyl (-S(=O)₂-aryl), or tosyl (CH₃C₆H₄SO₂-), provided that the substituted atom's normal valence is not exceeded, and that the substitution does not significantly adversely affect the manufacture, stability, or desired property of the compound. When a compound is substituted, the indicated number of carbon atoms is the total number of carbon atoms in the group, including those of the substituent(s).

## Claims

1. A method for modifying a polyimide comprising reacting a first polyimide with diamine to produce a second polyimide having an anhydride-amine stoichiometry of -2 to -40 mol% and reacting the second polyimide with an bis(anhydride), bis(ether anhydride) or tetracarboxylic acid to produce a final polyimide having an anhydride-amine stoichiometry of -1 to 2 mol%.

2. The method of claim 1, wherein the second polyimide and bis(anhydride), bis(ether anhydride) or tetracarboxylic acid are reacted in melt.

3. The method of claim 1, wherein the second polyimide and bis(anhydride), bis(ether anhydride) or tetracarboxylic acid are reacted in solution.

4. A method for modifying a polyimide comprising reacting a first polyimide with an amine to produce a second polyimide having an anhydride-amine stoichiometry of -2 to -40 mol% and reacting the second polyimide with a monoanhydride to produce a final polyimide having an anhydride-amine stoichiometry of -1 to 2 mol%.

5. The method of claim 4, wherein the second polyimide and monoanhydride are reacted in melt.

6. The method of claim 4, wherein the second polyimide and monoanhydride are reacted in solution.

7. The method of any one of claims 1 to 6, wherein the polyimide is a polyetherimide.

8. The method of any one of claims 1 to 7, wherein the diamine is used in an amount of 2 to 40 mol% based on the amount of anhydride end groups in the first polyimide.

9. The method of any one of the preceding claims, wherein the first polyimide is reacted with the diamine in melt.

10. The method of claim 9, wherein the final 25 to 50% of the reaction time to produce a final polyimide is conducted at a pressure less than atmospheric pressure.

11. The method of any one of claims 1 to 8, wherein the first polyimide is reacted with the diamine in a solvent.

12. The method of any one of the preceding claims wherein the diamine comprises m-phenylene diamine, p-phenylene diamine, bis(4-aminophenyl) sulfone or a combination thereof.

13. The method of any one of the preceding claims wherein the second polyimide has a weight average molecular weight less than the weight average molecular weight of the first polyimide.

14. A polyimide obtainable according to the method of claim 1, wherein the polyimide comprises 20 to 300 structural units derived from a first bis(anhydride) and a diamine, a linking unit derived from a second bis(anhydride), a bis(ether anhydride), or a tetra carboxylic acid, and wherein the polyimide has a weight average molecular weight of 10,000 to 150,000 Daltons as determined by gel permeation chromatography using polystyrene standards and an anhydride-amine stoichiometry of -1 to 2 mol%.

15. A method for modifying a polyimide comprising reacting a first polyimide with diamine and a bis(anhydride), bis(ether anhydride) or tetracarboxylic acid to produce a final polyimide having an anhydride-amine stoichiometry of -1 to 2 mol%.

## Patentansprüche

1. Verfahren zum Modifizieren eines Polyimids, umfassend Umsetzen eines ersten Polyimids mit Diamin, um ein zweites Polyimid herzustellen, das eine Anhydrid-Amin-Stöchiometrie von -2 bis -40 Mol-% aufweist, und Umsetzen des zweiten Polyimids mit einem Bis(anhydrid), einem Bis(etheranhydrid) oder einer Tetracarbonsäure, um ein endgültiges Polyimid herzustellen, das eine Anhydrid-Amin-Stöchiometrie von -1 bis 2 Mol-% aufweist.

2. Verfahren nach Anspruch 1, wobei das zweite Polyimid und das Bis(anhydrid), das Bis(etheranhydrid) oder die Tetracarbonsäure in Schmelze umgesetzt werden.

3. Verfahren nach Anspruch 1, wobei das zweite Polyimid und das Bis(anhydrid), das Bis(etheranhydrid) oder die Tetracarbonsäure in einer Lösung umgesetzt werden.

4. Verfahren zum Modifizieren eines Polyimids, umfassend Umsetzen eines ersten Polyimids mit einem Amin, um ein zweites Polyimid herzustellen, das eine Anhydrid-Amin-Stöchiometrie von -2 bis -40 Mol-% aufweist, und Umsetzen des zweiten Polyimids mit einem Monoanhydrid, um ein endgültiges Polyimid herzustellen, das eine Anhydrid-Amin-Stöchiometrie von -1 bis 2 Mol-% aufweist.

5. Verfahren nach Anspruch 4, wobei das zweite Polyimid und das Monoanhydrid in Schmelze umgesetzt werden.

6. Verfahren nach Anspruch 4, wobei das zweite Polyimid und das Monoanhydrid in einer Lösung umgesetzt werden.

7. Verfahren nach einem der Ansprüche 1 bis 6, wobei das Polyimid ein Polyetherimid ist.

8. Verfahren nach einem der Ansprüche 1 bis 7, wobei das Diamin auf Grundlage der Menge an Anhydrid-Endgruppen im ersten Polyimid in einer Menge von 2 bis 40 Mol-% verwendet wird.

9. Verfahren nach einem der vorhergehenden Ansprüche, wobei das erste Polyimid mit dem Diamin in Schmelze umgesetzt wird.

10. Verfahren nach Anspruch 9, wobei die letzten 25 bis 50 % der Reaktionszeit zum Herstellen eines endgültigen Polyimid bei einem Druck durchgeführt werden, der unter Atmosphärendruck liegt.

11. Verfahren nach einem der Ansprüche 1 bis 8, wobei das erste Polyimid mit dem Diamin in einem Lösungsmittel umgesetzt wird.

12. Verfahren nach einem der vorhergehenden Ansprüche, wobei das Diamin m-Phenylendiamin, p-Phenylendiamin, Bis(4-aminophenyl)sulfon oder eine Kombination davon umfasst.

13. Verfahren nach einem der vorhergehenden Ansprüche, wobei das zweite Polyimid ein geringeres Gewichtsmittel des Molekulargewichts als das Gewichtsmittel des Molekulargewichts des ersten Polyimids aufweist.

14. Polyimid, das nach dem Verfahren nach Anspruch 1 erhalten werden kann, wobei das Polyimid 20 bis 300 Struktureinheiten, die aus einem ersten Bis(anhydrid) und einem Diamin erhalten wurden, und eine Verknüpfungseinheit umfasst, die aus einem zweiten Bis(anhydrid), einem Bis(etheranhydrid) oder einer Tetracarbonsäure erhalten wurde, und wobei das Polyimid ein Gewichtsmittel des Molekulargewichts von 10.000 bis 150.000 Daltons, wie durch Gel-Permeations-Chromatographie unter Verwendung von Polystyren-Standards ermittelt, und eine Anhydrid-Amin-Stöchiometrie von -1 bis 2 Mol-% aufweist.

15. Verfahren zum Modifizieren eines Polyimids, umfassend Umsetzen eines ersten Polyimids mit Diamin und einem Bis(anhydrid), einem Bis(etheranhydrid) oder einer Tetracarbonsäure, um ein endgültiges Polyimid herzustellen, das eine Anhydrid-Amin-Stöchiometrie von -1 bis 2 Mol-% aufweist.

## Revendications

1. Procédé pour modifier un polyimide comprenant la réaction d'un premier polyimide avec une diamine pour produire un second polyimide ayant une stœchiométrie anhydride-amine de - 2 à - 40 % en moles et la réaction du second polyimide avec bis(anhydride), bis(anhydride d'éther) ou un acide tétracarboxylique pour produire un polyimide final ayant une stœchiométrie anhydride-amine de - 1 à 2 % en moles.

2. Procédé selon la revendication 1, dans lequel le second polyimide et le bis(anhydride), le bis(anhydride d'éther) ou l'acide tétracarboxylique sont mis en réaction à l'état fondu.

3. Procédé selon la revendication 1, dans lequel le second polyimide et le bis(anhydride), le bis(anhydride d'éther) ou l'acide tétracarboxylique sont mis en réaction en solution.

4. Procédé pour modifier un polyimide comprenant la réaction d'un premier polyimide avec une amine pour produire un second polyimide ayant une stœchiométrie anhydride-amine de - 2 à - 40 % en moles et la réaction du second polyimide avec un monoanhydride pour produire un polyimide final ayant une stœchiométrie anhydride-amine de - 1 à 2 % en moles.

5. Procédé selon la revendication 4, dans lequel le second polyimide et le monoanhydride sont mis en réaction à l'état fondu.

6. Procédé selon la revendication 4, dans lequel le second polyimide et le monoanhydride sont mis en réaction en solution.

7. Procédé selon l'une quelconque des revendications 1 à 6, dans lequel le polyimide est un polyétherimide.

8. Procédé selon l'une quelconque des revendications 1 à 7, dans lequel la diamine est utilisée en une quantité allant de 2 à 40 % en moles par rapport à la quantité de groupes terminaux anhydride dans le premier polyimide.

9. Procédé selon l'une quelconque des revendications précédentes, dans lequel le premier polyimide est mis en réaction avec la diamine à l'état fondu.

10. Procédé selon la revendication 9, dans lequel les 25 à 50% finaux du temps de réaction pour produire un polyimide final sont conduits à une pression inférieure à la pression atmosphérique.

11. Procédé selon l'une quelconque des revendications 1 à 8, dans lequel le premier polyimide est mis en réaction avec la diamine dans un solvant.

12. Procédé selon l'une quelconque des revendications précédentes, dans lequel la diamine comprend la m-phénylènediamine, la p-phénylènediamine, la bis(4-aminophényl) sulfone ou une combinaison de celles-ci.

13. Procédé selon l'une quelconque des revendications précédentes dans lequel le second polyimide a une masse molaire moyenne en masse inférieure à la masse molaire moyenne en masse du premier polyimide.

14. Polyimide pouvant être obtenu selon le procédé de la revendication 1, dans lequel le polyimide comprend 20 à 300 unités structurelles dérivées d'un premier bis(anhydride) et d'une diamine, une unité de liaison dérivée d'un second bis(anhydride), d'un bis(éther anhydride), ou d'un acide tétracarboxylique, et dans lequel le polyimide a une masse molaire moyenne en masse de 10 000 à 150 000 daltons, déterminée par chromatographie sur gel perméable en utilisant des standards de polystyrène, et une stœchiométrie anhydride-amine de - 1 à 2 % en moles.

15. Procédé de modification d'un polyimide comprenant la réaction d'un premier polyimide avec une diamine et un bis(anhydride), un bis(éther-anhydride) ou un acide tétracarboxylique pour produire un polyimide final ayant une stœchiométrie anhydride-amine de - 1 à 2 % en moles.
